# EUROPEAN PATENT APPLICATION

(11) **EP 1 736 487 A1**
(43) Date of publication of application: **27.12.2006**
(21) Application number: 05728774.0
(22) Date of filing: 05.04.2005
(51) Int. Cl.: C08F 214/18, C08F 2/26

(54) **FLUORINE-CONTAINING ELASTOMER POLYMER AND METHOD FOR PRODUCING SAME**

(30) Priority: 07.04.2004 JP 2004113682; 16.09.2004 JP 2004270479
(71) Applicant: DAIKIN INDUSTRIES, LTD., Osaka-shi, Osaka 530-8323 (JP)
(72) Inventor: TSUDA, Nobuhiko, c/o DAIKIN INDUSTRIES, LTD., Settsu-shi, Osaka 5668585 (JP); TANAKA, Yoshiki, c/o DAIKIN INDUSTRIES, LTD., Settsu-shi, Osaka 5668585 (JP); MORITA, Shigeru, c/o DAIKIN INDUSTRIES, LTD., Settsu-shi, Osaka 5668585 (JP); SAWADA, Yasuhiko, c/o DAIKIN INDUSTRIES, LTD., Settsu-shi, Osaka 5668585 (JP); SHIMIZU, Tetsuo, c/o DAIKIN INDUSTRIES, LTD., Settsu-shi, Osaka5 668585 (JP)
(74) Representative: HOFFMANN EITLE
(86) International application number: PCT/JP2005/006676
(87) International publication number: WO 2005/097846

(57) **Abstract**

The present invention provides an elastomeric fluoropolymer excellent in productivity and crosslinkability and a method of producing the same. The present invention is an elastomeric fluoropolymer having a vinyl group-containing fluorinated emulsifier-derived unit (A) and a unit (B) derived from a cure site monomer (b1) and/or bromine atom- and/or iodine atom-containing saturated aliphatic compound (b2), wherein the vinyl group-containing fluorinated emulsifier is a compound having a radical polymerizable unsaturated bond and a hydrophilic group within the molecule.

## Description

### TECHNICAL FIELD

The present invention relates to an elastomeric fluoropolymer and a method of producing the same.

### BACKGROUND ART

In carrying out the polymerization in an aqueous medium for obtaining fluoroelastomers, fluorine-containing surfactants are often used as emulsifiers in the art, and the fluoroelastomers obtained from such polymerization generally contain residual fluorine-containing surfactants. The occurrence of residual fluorine-containing surfactants causes a problem, namely disturbs the vulcanization or curing step, which is a step in the process of molding.

A known method of producing a fluoroelastomer comprises polymerizing a fluoromonomer in an aqueous medium with a pH of 5 to 10 in the presence of CF₂=CFO-(CF₂)ₛ-COOT (in which s is an integer of 1 to 7 and T is an alkali metal or the like) (cf. e.g. Patent Document 1: Japanese Kokoku Publication S61-33848). However, the method described in Patent Document 1 has a problem in that the polymerization should be carried out while adjusting the aqueous medium to a pH within a narrow range. Patent Document 1 gives no description of the production of iodine- or bromine-terminated fluoroelastomers which are useful in peroxide curing.

As a method of producing fluoroelastomers, there is known the method comprising producing aqueous dispersions of a vinylidene fluoride [VDF]-based copolymer in the presence of CF₂=CF-(CF₂)ₜ-Y (wherein t is an integer of 1 to 10 and Y is a carboxyl group) (cf. e.g. Patent Document 2: Japanese Kokai Publication H08-67795). However, Patent Document 2 neither describes iodine- and/or bromine-containing elastomers nor suggests that the polymerization may be carried out stably in the presence of a chain transfer agent. Furthermore, there is a description of the seed polymerization of a fluorine-free monomer in the presence of an aqueous dispersion of that VDF-based copolymer, but there is no description of the seed polymerization of a fluoromonomer.

For producing fluoroelastomers, a multistage polymerization method is known which comprises carrying out the first stage of polymerization in an aqueous medium in the presence of an emulsifier in an amount of not smaller than 0.5% by weight relative to the aqueous medium, then diluting the thus-obtained emulsion comprising seed particles, adding a monomer and carrying out the second stage of polymerization and so forth (cf. e.g. Patent Document 3: WO 00/001741). By carrying out the polymerization in multiple stages according to this method, it is possible to increase the productivity while reducing the amount of the emulsifier to be used. However, a certain amount of the emulsifier remains. Further, Patent Document 3 gives no suggestion about carrying out the multistage polymerization in the presence of a vinyl group-containing fluorinated emulsifier.

### DISCLOSURE OF INVENTION

### PROBLEMS WHICH THE INVENTION IS TO SOLVE

In view of the above-discussed state of the art, it is an object of the present invention to provide an elastomeric fluoropolymer excellent in productivity and crosslinkability and a method of producing the same.

### MEANS FOR SOLVING THE PROBLEMS

The present invention is an elastomeric fluoropolymer having a vinyl group-containing fluorinated emulsifier-derived unit (A) and a unit (B) derived from a cure site monomer (b1) and/or bromine atom- and/or iodine atom-containing saturated aliphatic compound (b2), wherein the vinyl group-containing fluorinated emulsifier is a compound having a radical polymerizable unsaturated bond and a hydrophilic group within the molecule.

The present invention is an elastomeric fluoropolymer having a vinyl group-containing fluorinated emulsifier-derived unit (A) and a crosslinking site-containing monomer-derived unit (B), wherein the vinyl group-containing fluorinated emulsifier is a vinyl group-containing fluorinated compound represented by the general formula (I):

CF₂=CF-(CF₂)ₐ-Y (I)

[wherein a represents an integer of 1 to 10 and Y represents -SO₃M or -COOM in which M represents H, NH₄ or an alkali metal], a vinyl group-containing fluorinated compound (II) represented by the general formula (II):

CF₂=CF-(CF₂C(CF₃)F)_{b}-Y (II)

[wherein b represents an integer of 1 to 5 and Y represents -SO₃M or -COOM in which M represents H, NH₄ or an alkali metal], a vinyl group-containing fluorinated compound represented by the general formula (III):

CF₂=CFO-(CF₂)_{c}-Y (III)

[wherein c represents an integer of 1 to 10 and Y represents -SO₃M or -COOM in which M represents H, NH₄ or an alkali metal], a vinyl group-containing fluorinated compound represented by the general formula (IV):

CF₂₌CF (CF₂)_{d}-O- (CF₂CFXO) ₑ- (CF₂)_{f}-Y (IV)

[wherein X represents -F or -CF₃, d represents an integer of 0 to 2, e represents an integer of 1 to 10, f represents an integer of 1 to 3 and Y represents -SO₃M or -COOM in which M represents H, NH₄ or an alkali metal], a vinyl group-containing fluorinated compound represented by the general formula (V):

CH₂=CFCF₂O- (CF (CF₃) CF₂O) g-CF (CF₃) -Y (V)

[wherein g represents an integer of 0 to 10 and Y represents -SO₃M or -COOM in which M represents H, NH₄ or an alkali metal], a vinyl group-containing fluorinated compound represented by the general formula (VI):

CF₂=CF (CF₂) ₕO- (CF (CF₃) CF₂O) i-CF (CF₃) -Y (VI)

[wherein h represents an integer of 1 to 6, i represents an integer of 1 to 10 and Y represents - SO₃M or -COOM in which M represents H, NH₄ or an alkali metal], a vinyl group-containing fluorinated compound represented by the general formula (VII):

CH₂=CH (CF₂)ₚ₁-Y (VII)

[wherein p1 represents an integer of 1 to 10 and Y represents -SO₃M or -COOM in which M represents H, NH₄ or an alkali metal] and/or a vinyl group-containing fluorinated compound represented by the general formula (VIII):

CF₂=CFO-(CH₂)_{q}-(CF₂)ₚ₂-Y (VIII)

[wherein q represents an integer of 1 to 4, p2 represents an integer of 1 to 10 and Y represents - SO₃M or -COOM in which M represents H, NH₄ or an alkali metal].

The present invention is a method of producing an elastomeric fluoropolymer comprising polymerizing a fluoromonomer in an aqueous medium in the presence of a vinyl group-containing fluorinated emulsifier and a cure site monomer (b1) and/or a bromine atom- and/or iodine atom-containing saturated aliphatic compound (b2), wherein the vinyl group-containing fluorinated emulsifier is a compound having a radical polymerizable unsaturated bond and a hydrophilic group within the molecule.

The present invention is a method of producing an elastomeric fluoropolymer comprising polymerizing a fluoromonomer in an aqueous medium in the presence of a vinyl group-containing fluorinated emulsifier and a crosslinking site-containing monomer, wherein the vinyl group-containing fluorinated emulsifier is the vinyl group-containing fluorinated compound (I), the vinyl group-containing fluorinated compound (II), the vinyl group-containing fluorinated compound (III), the vinyl group-containing fluorinated compound (IV), the vinyl group-containing fluorinated compound (V), the vinyl group-containing fluorinated compound (VI), the vinyl group-containing fluorinated compound (VII) and/or the vinyl group-containing fluorinated compound (VIII).

The present invention is an elastomeric fluoropolymer aqueous dispersion which comprises a particle comprising an elastomeric fluoropolymer dispersed in an aqueous medium, wherein the elastomeric fluoropolymer is the above-mentioned elastomeric fluoropolymer or an elastomeric fluoropolymer produced by the above-mentioned method of producing an elastomeric fluoropolymer, the elastomeric fluoropolymer aqueous dispersion contains a vinyl group-containing fluorinated emulsifier or does not contain any such emulsifier and the content of the vinyl group-containing fluorinated emulsifier is lower than 1000 ppm relative to the elastomeric fluoropolymer aqueous dispersion.

The present invention is an elastomeric fluoropolymer composition which contains the elastomeric fluoropolymer.

The present invention is an elastomeric fluoropolymer molding which is obtained by crosslinking of the elastomeric fluoropolymer.

In the following, the present invention is described in detail.

The elastomeric fluoropolymer of the invention means a noncrystalline fluoropolymer having rubber elasticity. The fluoropolymer is a polymer whose fluorine atom content is at least 58% by mass, preferably 64% by mass, and it may be a partially fluorinated polymer or a perfluoropolymer.

The elastomeric fluoropolymer of the invention has 30 to 80% by mass of the comonomer unit of the first monomer.

The term "first monomer" as used herein means vinylidene fluoride [VDF] or tetrafluoroethylene [TFE] constituting the comonomer unit that is the greatest majority among all comonomer units in the molecular structure of the elastomeric fluoropolymer. Among the elastomeric fluoropolymers of the invention, those copolymers derived from the first monomer VDF are sometimes referred to as "VDF-based copolymers", and those polymers derived from the first monomer TFE as "TFE-based copolymers".

In the present specification, each comonomer unit mentioned above is a part of the molecular structure of the elastomeric fluoropolymer and means the portion derived from the corresponding monomer. For example, the VDF unit is a part of the molecular structure of the VDF-based copolymer and is the VDF-derived segment and is represented by -(CH₂-CF₂)-. The above-mentioned "all comonomer units" are all monomer-derived portions in the molecular structure of the elastomeric fluoropolymer.

The contents of the above-mentioned comonomer units can be determined by F¹⁹-NMR measurements.

In the elastomeric fluoropolymer of the invention, the units derived from the monomer(s) other than the first monomer may be units derived from only one of the monomers copolymerizable with the first monomer or may be units derived from two or more monomers copolymerizable with the first monomer.

The monomer copolymerizable with the first monomer is, for example, a fluoroolefin, a fluorine-containing vinyl ether or an olefin hydrocarbon.

The fluoroolefin is not particularly restricted but includes, among others, hexafluoropropylene [HFP], tetrafluoroethylene [TFE], 1,2,3,3,3-pentafluoropropene [1-HPFP], chlorotrifluoroethylene [CTFE] and vinyl fluoride [VF].

The fluorine-containing vinyl ether is not particularly restricted but includes perfluoro(alkyl vinyl ether) species.

Preferred as the perfluoro(alkyl vinyl ether) [PAVE] are compounds represented by the formula CF₂=CFO(Rf^{a}O)ₙ(Rf^{b}O)ₘRf^{C} [in which Rf^{a} and Rf^{b} are the same or different and each is a straight or branched perfluoroalkylene group containing 2 to 6 carbon atoms, m and n each independently is an integer of 0 to 10 and Rf^{c} is a perfluoroalkyl group containing 1 to 6 carbon atoms].

More preferred as the above-mentioned PAVE are compounds represented by the formula CF₂=CFO (CF₂CFXO)ᵣR f^{d} [in which X is -F or -CF₃, r is an integer of 0 to 5 and Rf^{d} is a perfluoroalkyl group containing 1 to 6 carbon atoms].

The above-mentioned PAVE is preferably perfluoro(methyl vinyl ether) [PMVE], perfluoro(ethyl vinyl ether) [PEVE] or perfluoro(propyl vinyl ether) [PPVE].

The above-mentioned PAVE is preferably a compound represented by the formula CF₂=CFO[(CF₂)ᵤCF₂CFZ¹O]ᵥRf^{e} [in which Rf^{e} is a perfluoroalkyl group containing 1 to 6 carbon atoms, u is an integer of 0 or 1, v is an integer of 0 to 5 and Z¹ is -F or -CF₃].

The above-mentioned group Rf^{e} is preferably - C₃F₇, the integer u is preferably 0 and the integer v is preferably 1.

The above-mentioned PAVE is preferably a compound represented by the formula CF₂=CFO [(CF₂CF(CF₃)O)ₘ(CF₂CF₂CF₂O)ₙ(CF₂)_{y}]C_{z}F_{2z+1}[in which m and n each independently is an integer of 0 to 10, y is an integer of 0 to 3 and z is an integer of 1 to 5].

Preferably, the above-mentioned integers m and n each independently is 0 or 1, and the integer z is preferably 1.

The above-mentioned PAVE is preferably a compound represented by the formula CF₂=CFOCF₂CF(CF₃)O(CF₃O)_{w}CₓF₂ₓ₊₁ [in which w is an integer of 1 to 5 and x is an integer of 1 to 3].

The integer x mentioned above is preferably 1.

When the elastomeric fluoropolymer of the invention contains PAVE units, the PAVE unit content is preferably 20 to 70% by mass.

When the elastomeric fluoropolymer of the invention contains PMVE units, the PMVE unit content is preferably 30 to 55% by mass.

The hydrocarbon olefin mentioned above is not particularly restricted but may be ethylene or propene, for instance, and propene is preferred.

When the elastomeric fluoropolymer of the invention contains hydrocarbon olefin units, the hydrocarbon olefin unit content is preferably 4 to 20% by mass.

The elastomeric fluoropolymer of the invention is not particularly restricted provided that the fluorine atom content is at least 58% by mass. As examples, there may be mentioned fluoropolymers producible by emulsion polymerization, including, among others, TFE/perfluoro(vinyl ether)-based copolymers, VdF/HFP-based copolymers, VdF/CTFE-based copolymers, VdF/HFP/TFE-based copolymers, VdF/CTFE/TFE-based copolymers, TFE/propylene-based copolymers, TFE/propylene/VdF-based copolymers, ethylene/HFP-based copolymers and like fluorocopolymers.

The elastomeric fluoropolymer of the invention is preferably a VDF-based copolymer or a TFE-based copolymer. The TFE-based copolymer is preferably a TFE/propylene-based copolymer or a TFE/perfluoro-vinyl ether-based copolymer.

The VDF-based copolymer includes, among others, VDF/HFP copolymers, VDF/HFP/TFE copolymers, VDF/HFP/TFE/4-bromo-3,3,4,4-tetrafluorobutene-1 copolymers, VDF/HFP/TFE/4-iodo-3,3,4,4-tetrafluorobutene-1 copolymers, VDF/PMVE/TFE/4-bromo-3,3,4,4-tetrafluorobutene-1 copolymers, VDF/PMVE/TFE/4-iodo-3,3,4,4-tetrafluorobutene-1 copolymers and VDF/PMVE/TFE/1,1,3,3,3-pentafluoropropene copolymers.

The TFE/propylene-based copolymer is, for example, a TFE/propylene copolymer.

The TFE/perfluoro(vinyl ether)-based copolymer includes, among others, TFE/PMVE/ethylene copolymers, TFE/PMVE/ethylene/4-bromo-3,3,4,4-tetrafluorobutene-1 copolymers, TFE/PMVE/ethylene/4-iodo-3,3,4,4-tetrafluorobutene-1 copolymers, TFE/PMVE copolymers, TFE/PMVE/perfluoro(8-cya no-5-methyl-3,6-dioxa-l-octent) copolymers, TFE/PMVE/4-iodo-3,3,4,4-tetrafluorobutene-1 copolymers and TFE/PMVE/perfluoro(2-phenoxyprop,yl vinyl ether) copolymers.

The elastomeric fluoropolymer of the invention comprises a unit (A) derived from the vinyl group-containing fluorinated emulsifier, and a unit (B) derived from a cure site monomer (b1) and/or a bromine atom- and/or iodine atom-containing saturated aliphatic compound (b2).

The vinyl group-containing fluorinated emulsifier is a compound containing a radical polymerizable unsaturated bond and a hydrophilic group within the molecule.

The compound containing a radical polymerizable unsaturated bond and a hydrophilic group within the molecule is preferably a vinyl group-containing fluorinated compound (1) represented by the general formula (1):

CR¹R²=CR³(CR⁴R⁵)ⱼ-(O)ₖ -R-Y (1)

[wherein R¹, R², R³, R⁴ and R⁵ are the same or different and each represents a perfluoroalkyl group (which may optionally be substituted by H), H, F, Cl, Br or I, R represents a straight or branched fluoroalkylene group resulting from substitution of part or all of H atoms of the corresponding alkylene group by F, which may contain oxygen [-O-] atom in the main chain thereof, j represents an integer of 0 to 6, k represents an integer of 0 or 1, and Y represents a hydrophilic group].

In the above general formula (1), the above-mentioned R¹, R², R³, R⁴ and R⁵, which may be the same or different, each preferably is H or F.

In the above general formula (1), the above-mentioned R is preferably a straight or branched perfluoroalkylene group containing 1 to 23 carbon atoms within the main chain thereof, which may contain oxygen [-O-] atom in the main chain thereof. When it contains oxygen [-O-] atom in the main chain thereof, the oxygen atom is preferably an oxygen atom constituting a polyoxyalkylene group composed of 1 to 10 oxyalkylene units (each preferably containing 2 or 3 carbon atoms). When it is branched, the side chain is preferably -CF₃.

In the above general formula (1), the integer j is preferably 0 to 2.

In the above general formula (1), the hydrophilic group represented by Y is preferably - SO₃M or -COOM (in which M represents H, NH₄ or an alkali metal).

The vinyl group-containing fluorinated emulsifier mentioned above preferably is the vinyl group-containing fluorinated compound (I), the vinyl group-containing fluorinated compound (II), the vinyl group-containing fluorinated compound (III), the vinyl group-containing fluorinated compound (IV), the vinyl group-containing fluorinated compound (V), the vinyl group-containing fluorinated compound (VI), the vinyl group-containing fluorinated compound (VII) and/or the vinyl group-containing fluorinated compound (VIII).

The vinyl group-containing fluorinated emulsifier may comprise a single species or mutually differing two or more species each independently selected from among the vinyl group-containing fluorinated compounds (I) to (VIII).

The vinyl group-containing fluorinated compounds (I) to (VIII) each is an ethylenic compound, as described later herein, and, when caused to be present in the reaction system for addition on the occasion of the above-mentioned polymerization, it constitutes a part of the polymer chain of the elastomeric fluoropolymer.

In the present specification, a portion derived from the vinyl group-containing fluorinated emulsifier and constituting a part of the molecular structure of the elastomeric fluoropolymer is hereinafter sometimes referred to as "emulsifier unit".

The vinyl group-containing fluorinated compound (I) is represented by the general formula (I) :

CF₂=CF-(CF₂)ₐ-Y (I)

[wherein a represents an integer of 1 to 10 and Y represents -SO₃M or -COOM in which M represents H, NH₄ or an alkali metal].

In the above general formula (I), the integer a is preferably not greater than 5, more preferably not greater than 2. The above group Y is preferably -COOM from the proper water solubility and surfactant activity viewpoint, and M is preferably H or NH₄ from the viewpoint of little tendency toward remaining as an impurity and of improved thermal stability of the final product moldings.

As the vinyl group-containing fluorinated compound (I), there may be mentioned, among others, the following:

CF₂=CF-CF₂-COOH,

CF₂=CF-CF₂-COONH₄,

CF₂=CF-CF₂CF₂-COOH,

CF₂=CF-CF₂-COONH₄,

CF₂=CF-CF₂-SO₃H,

CF₂=CF-CF₂-SO₃Na,

CF₂=CF-CF₂CF₂-SO₃H and

CF₂=CF-CF₂CF₂-SO₃Na .

Among them, CF₂=CFCF₂-COONH₄ is preferred from the improved dispersion stability viewpoint.

The vinyl group-containing fluorinated compound (II) is represented by the general formula (II):

CF₂=CF-(CF₂C(CF₃)F)_{b}-Y (II)

[wherein b represents an integer of 1 to 5 and Y represents -SO₃M or -COOM in which M represents H, NH₄ or an alkali metal].

In the above general formula (II), the integer b is preferably not greater than 3 from the emulsifying ability viewpoint. Y is preferably - COOM from the proper water solubility and surfactant activity viewpoint, and M is preferably H or NH₄ from the viewpoint of little tendency toward remaining as an impurity and of improved thermal stability of the final product moldings.

As the vinyl group-containing fluorinated compound (II), there may be mentioned, among others, the following: 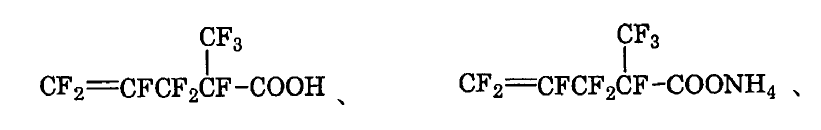 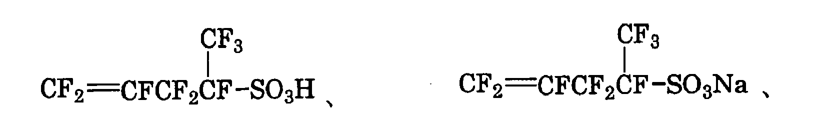 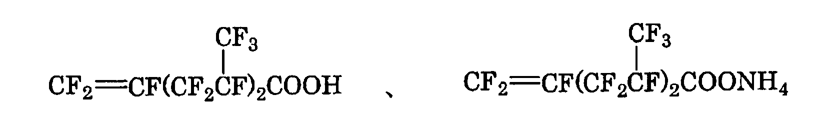 Preferred among them from the improved dispersion stability viewpoint are the following:

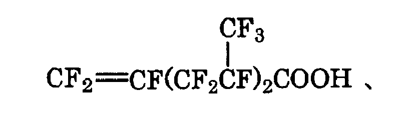

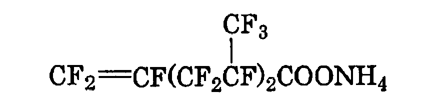

The vinyl group-containing fluorinated compound (III) is represented by the general formula (III):

CF₂=CFO-(CF₂)_{c}-Y (III)

[wherein c represents an integer of 1 to 10 and Y represents -SO₃M or -COOM in which M represents H, NH₄ or an alkali metal].

In the above general formula (III), the integer c is preferably not greater than 5 from the water solubility viewpoint, Y is preferably -COOM from the proper water solubility and surfactant activity viewpoint, and M is preferably H or NH₄ from the better dispersion stability viewpoint.

As the vinyl group-containing fluorinated compound (III), there may be mentioned, among others, the following:

CF₂=CF-OCF₂-COOH,

CF₂=CF-OCF₂-COONH₄,

CF₂=CF-OCF₂CF₂-COOH,

CF₂=CF-OCF₂CF₂-COONH₄,

CF₂=CF-OCF₂CF₂CF₂-COOH and

CF₂=CF-OCF₂CF₂CF₂-COONH₄.

Among them, CF₂=CF-OCF₂CF₂CF₂-COONH₄ is preferred from the better dispersion stability viewpoint.

The vinyl group-containing fluorinated compound (IV) is represented by the general formula (IV) :

CF₂=CF(CF₂)_{d}-O-(CF₂CFXO)ₑ-(CF₂)_{f}-Y (IV)

[wherein X represents -F or -CF₃, d represents an integer of 0 to 2, e represents an integer of 1 to 10, f represents an integer of 1 to 3 and Y represents -SO₃M or -COOM in which M represents H, NH₄ or an alkali metal].

In the above general formula (IV), the moiety X is preferably -CF₃ from the surfactant activity viewpoint, the integer d is preferably 0 (zero) from the copolymerizability viewpoint, the integer e is preferably not greater than 5 from the water solubility viewpoint, the group Y is preferably - COOM from the proper water solubility and surfactant activity viewpoint, the integer f is preferably not greater than 2, and M is preferably H or NH₄.

As the vinyl group-containing fluorinated compound (IV), there may be mentioned, among others, the following:

CF₂=CF-O-CF₂CF(CF₃)-OCF₂-COOH,

CF₂=CF-O-CF₂CF(CF₃)-OCF₂-COONH₄,

CF₂₌CF-O-CF₂CF(CF₃)-OCF₂SO₃H ,

CF₂=CF-O-CF₂CF(CF₃)-OCF₂SO₃Na,

CF₂=CF-O-CF₂CF(CF₃)-OCF₂CF₂-COOH,

CF₂=CF-O-CF₂CF(CF₃)-OCF₃CF₂-COONH₄,

CF₂=CF-O-CF₂CF(CF₃)-OCF₂CF₂SO₃H,

CF₂=CF-O-CF₂CF(CF₃)-OCF₂CF₂SO₃Na,

CF₂=CF-CF₂-O-CF₂CF(CF₃)-OCF₂CF₂-COOH,

CF₂=CF-CF₂-O-CF₂CF(CF₃)-OCF₂CF₂-COONH₄,

CF₂=CF-CF₂-O-CF₂CF(CF₃)-OCF₂CF₂SO₃H,

CF₂=CF-CF₂-O-CF₂CF(CF₃)-OCF₂CF₂SO₃Na,

CF₂=CF-CF₂-CF₂-O-CF₂CF(CF₃)-OCF₂CF₂-COOH ,

CF₂=CF-CF₂-CF₂-O-CF₂CF(CF₃)-OCF₂CF₂-COONH₄,

CF₂=CF-CF₂-CF₂-O-CF₂CF(CF₃)-OCF₂CF₂SO₃H,

CF₂=CF-CF₂-CF₂-O-CF₂CF(CF₃)-OCF₂CF₂SO₃Na

Preferred among them from the better dispersion stability viewpoint are:

CF₂=CF-O-CF₂CF(CF₃)-OCF₂-COOH,

CF₂=CF-O-CF₂CF(CF₃)-OCF₂-COONH₄ ,

CF₂=CF-O-CF₂CF(CF₃)-OCF₂SO₃H,

CF₂=CF-O-CF₂CF(CF₃)-OCF₂SO₃Na,

CF₂=CF-O-CF₂CF(CF₃)-OCF₂CF₂-COOH,

CF₂=CF-O-CF₂CF(CF₃)-OCF₂CF₂-COONH₄,

CF2=CF-O-CF₂CF(CF₃)-OCF₂CF₂SO₃H,

CF₂=CF-O-CF₂CF(CF₃)-OCF₂CF₂SO₃Na,

CF₂=CF-CF₂-O-CF₂CF(CF₃)-OCF₂CF₂-COOH,

CF₂=CF-CF₂-O-CF₂CF(CF₃)-OCF₂CF₂-COONH₄,

CF₂=CF-CF₂-O-CF₂CF(CF₃)-OCF₂CF₂-SO₃H,

CF₂=CF-CF₂-O-CF₂CF(CF₃)-OCF₂CF₂-SO₃Na

The vinyl group-containing fluorinated compound (V) is represented by the general formula (V) :

CH₂=CFCF₂O-(CF(CF₃)CF₂O)_{g}-CF(CF₃)-Y (V)

[wherein g represents an integer of 0 or 1 to 10 and Y represents -SO₃M or -COOM in which M represents H, NH₄ or an alkali metal].

In the above general formula (V), the integer g is preferably 0 or 1 to 5, more preferably 0 to 2, still more preferably 0 or 1, from the emulsifying activity viewpoint, Y is preferably -COOM from the proper water solubility and surfactant activity viewpoint, and M is preferably H or NH₄ from the viewpoint of little tendency toward remaining as an impurity and of improved thermal stability of the final product moldings.

As the vinyl group-containing fluorinated compound (V), there may be mentioned, among others, the following: 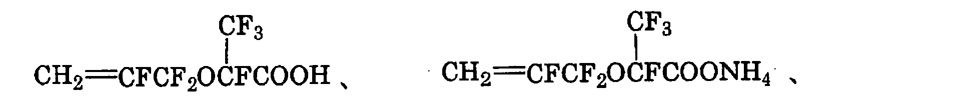 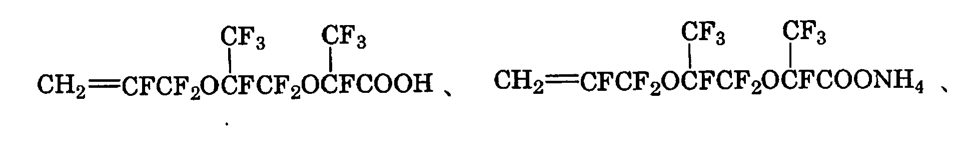 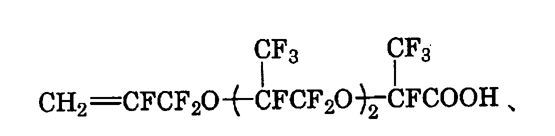 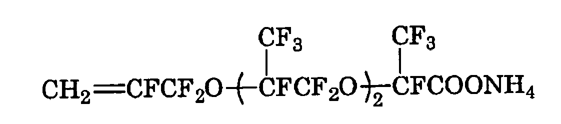 Among them, the following are preferred in view of their little tendency toward remaining as impurities and of their ability to improve the thermal stability of the final product moldings:

CH₂=CFCF₂OCF (CF₃) -COOH,

CH₂=CFCF₂OCF (CF₃) -COONH₄,

CH₂=CFCF₂OCF (CF₃) -CF₂OCF(CF₃)-COOH and

CH₂=CFCF₂OCF(CF₃) -CF₂OCF(CF₃)-COONH₄.

The vinyl group-containing fluorinated compound (VI) is represented by the general formula (VI) :

CF₂=CF(CF₂)ₕO-(CF(CF₃)CF₂O)ᵢ-CF(CF₃)-Y (VI)

[wherein h represents an integer of 1 to 6, i represents an integer of 1 to 10 and Y represents - SO₃M or -COOM in which M represents H, NH₄ or an alkali metal].

In the above general formula (VI), the integer h is preferably not greater than 2, more preferably not greater than 1, from the copolymerizability viewpoint, the integer i preferably not greater than 3 from the emulsifier activity viewpoint, the group Y is preferably -COOM from the proper water solubility and surfactant activity viewpoint, and M is preferably H or NH₄ from the viewpoint of little tendency toward remaining as an impurity and of improved thermal stability of the final product moldings.

As the vinyl group-containing fluorinated compound (VI), there may be mentioned, among others, the following: 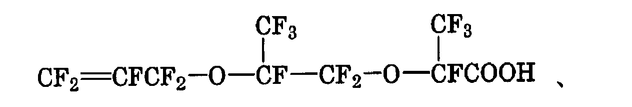 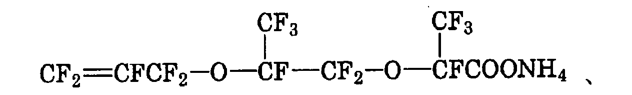 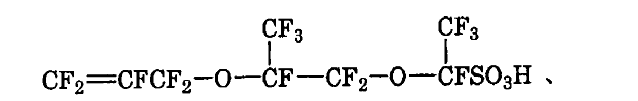 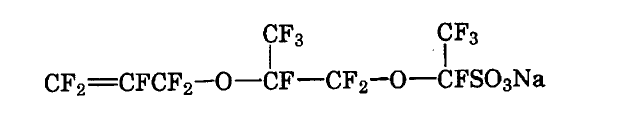 Among them, the following are preferred in view of their little tendency toward remaining as impurities and of their contribution to improvements in thermal stability of the final product moldings:

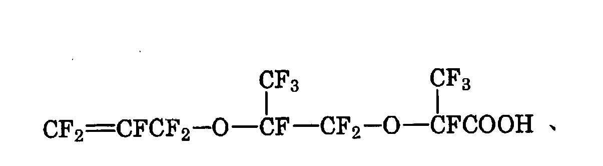

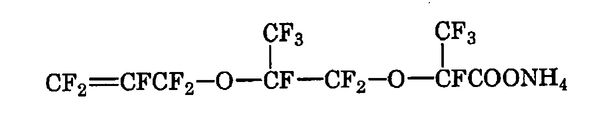

The vinyl group-containing fluorinated compound (VII) is represented by the general formula (VII):

CH₂=CH(CF₂)ₚ₁-Y (VII)

[wherein p1 represents an integer of 1 to 10 and Y represents -SO₃M or -COOM in which M represents H, NH₄ or an alkali metal].

In the above general formula (VII), the integer p1 is preferably not greater than 5, more preferably not greater than 2, from the emulsifying ability viewpoint and Y is preferably -COOM from the proper water solubility and surfactant activity viewpoint, and M is preferably H or NH₄ from the viewpoint of little tendency toward remaining as an impurity and of improved thermal stability of the final product moldings.

As the vinyl group-containing fluorinated compound (VII), there may be mentioned, among others, the following:

CH₂=CH-CF₂CF₂-COOH,

CH₂=CH-CF₂CF₂-COONH₄,

CH₂=CH-CF₂CF₂-SO₃H,

CH₂=CH-CF₂CF₂-SO₃Na,

CH₂=CH-CF₂CF₂CF₂-COOH,

CH₂=CH-CF₂CF₂CF₂-COONH₄,

CH₂=CH-CF₂CF₂CF₂-SO₃H and

CH₂=CH-CF₂CF₂CF₂-SO₃Na.

Among them, CH₂=CH-CF₂CF₂-COONH₄ is preferred from the better dispersion stability viewpoint.

The vinyl group-containing fluorinated compound (VIII) is represented by the general formula (VIII):

CF₂=CFO-(CH₂)_{q}-(CF₂)ₚ₂-Y (VIII)

[wherein q represents an integer of 1 to 4, p2 represents an integer of 1 to 10 and Y represents - SO₃M or -COOM in which M represents H, NH₄ or an alkali metal].

In the above general formula (VIII), the integer q is preferably not greater than 2, more preferably equal to 1. The integer p2 is preferably not greater than 5, more preferably not greater than 2, from the emulsifying ability viewpoint. The group Y is preferably -COOM from the proper water solubility and surfactant activity viewpoint, and M is preferably H or NH₄ from the viewpoint of little tendency toward remaining as an impurity and of improved thermal stability of the final product moldings.

As the vinyl group-containing fluorinated compound (VIII), there may be mentioned, among others, the following:

CF₂=CFO-CH₂CF₂CF₂-COOH,

CF₂=CFO-CH₂CF₂CF₂-COONH₄,

CF₂=CFO-CH₂CF₂CF₂-SO₃H and

CF₂=CFO-CH₂CF₂CF₂-SO₃Na .

Among them, CF₂=CFO-CH₂CF₂CF₂-COONH₄ is preferred from the better dispersion stability viewpoint.

From the good copolymerizability viewpoint, the vinyl group-containing fluorinated emulsifier mentioned above preferably is the above-mentioned vinyl group-containing fluorinated compound (I), vinyl group-containing fluorinated compound (III), vinyl group-containing fluorinated compound (IV), vinyl group-containing fluorinated compound (V), vinyl group-containing fluorinated compound (VI), vinyl group-containing fluorinated compound (VII), and/or vinyl group-containing fluorinated compound (VIII). More preferably, it is the above-mentioned vinyl group-containing fluorinated compound (V) and/or vinyl group-containing fluorinated compound (VI) and, still more preferably, it is the above-mentioned vinyl group-containing fluorinated compound (V).

The above-mentioned vinyl group-containing fluorinated emulsifier particularly preferably is a vinyl group-containing fluorinated compounds represented by the general formula (i):

CH₂=CFCF₂O-(CF(CF₃)CF₂O)ₖ-CF(CF₃)-Y (i)

(wherein k represents an integer of 0 to 3 and Y represents -SO₃M or -COOM in which M represents H, NH₄ or an alkali metal).

In the above general formula (i), k is preferably an integer of 0 to 2, more preferably an integer of 0 or 1, and Y is preferably -COOH or - COONH₄.

The vinyl group-containing fluorinated emulsifier mentioned above may be a mixture of compounds differing in the number of the oxyalkylene group added in each of the general formulas (I) to (VIII) and (i).

The "compounds containing a radical polymerizable unsaturated bond and a hydrophilic group within the molecule" such as the vinyl group-containing fluorinated emulsifiers, the vinyl group-containing fluorinated compounds (I) to (VIII) or vinyl group-containing fluorinated compound (i) constituting the vinyl group-containing fluorinated emulsifiers and the vinyl group-containing fluorinated compounds (1) can be prepared using the methods known in the art.

In the elastomeric fluoropolymer of the invention, the emulsifier unit content is preferably not lower than 10 ppm but not higher than 10% by mass. At levels lower than 10 ppm, the dispersion stability in aqueous media may be inferior as compared with the case of non-use of any conventional non-copolymerizable emulsifier and, at levels exceeding 10% by mass, such physical properties as thermal stability may be deteriorated.

A.more preferred lower limit to the emulsifier unit content is 25 ppm relative to the elastomeric fluoropolymer and a more preferred lower limit is 50 ppm. A more preferred upper limit to the emulsifier unit content is 5% by mass and a more preferred upper limit is 2.5% by mass.

The emulsifier unit content mentioned above is the value obtained by F¹⁹-NMR measurement.

The elastomeric fluoropolymer of the invention contains the unit derived from the above-mentioned vinyl group-containing fluorinated emulsifier and, therefore, shows better dispersion stability in aqueous media without using any of the noncopolymerizable emulsifiers known in the art; further, it tends to show an increased rate of curing.

The elastomeric fluoropolymer of the invention also contains, in addition to the above-mentioned emulsifier unit, namely the vinyl group-containing fluorinated emulsifier-derived unit (A), a unit (B) derived from a cure site monomer (b1) and/or a bromine atom- and/or iodine atom-containing saturated aliphatic compound (b2).

The cure site monomer (b1) comprises at least one compound selected from the group consisting of bromine-containing olefins, iodine-containing olefins, bromine-containing vinyl ethers, iodine-containing vinyl ethers, nitrile group-containing, fluorine-containing olefins, nitrile group-containing, fluorine-containing vinyl ethers, 1,1,3,3,3-pentafluoropropene [2-HPFP], perfluoro(2-phenoxypropyl vinyl ether) and unconjugated dienes.

As the above-mentioned bromine-containing olefins, iodine-containing olefins, bromine-containing vinyl ethers, iodine-containing vinyl ethers, nitrile group-containing, fluorine-containing olefins, nitrile group-containing, fluorine-containing vinyl ethers, and unconjugated dienes, there may be mentioned those compounds described in Laid-open US Patent Application No. 2002/0040119, for instance, and one or more species belonging to each compound group, for example to the group of bromine-containing olefins, may be used. Preferred are, however, the following: CH₂=CH-Rf-CH₂CH₂I (Rf being a perfluoroalkylene group),

CH₂=CHCF₂CF₂I, and

CF₂=C F O C F₂C F₂CH₂I .

The "bromine atom- and/or iodine atom-containing saturated aliphatic compound (b2)" mentioned above includes, as preferred example, those compounds derived from perfluorocarbons by substitution of one or two fluorine atoms by a bromine atom(s) and/or iodine atom(s), for example 1-bromo-2-iodoperfluoroethane, 1-bromo-3-iodoperfluoropropane, 1-iodo-2-bromo-1,1-difluoroethane and other compounds described in US Patent No. 5,151,492, methylene iodide, 1,4-diiodoperfluoro-n-butane, 1,6-diiodo-3,3,4,4-tetrafluorohexane, 1,3-diiodoperfluoropropane, 1,6-diiodoperfluorohexane, 1,3-diiodo-2-chloroperfluoropropane, 1,2-di(iododifluoromethyl)perfluorocyclobutane, monoiodoperfluoroethane; monoiodoperfluoropropane, monoiodoperfluorobutane, 2-iodo-1-hydroperfluoroethane, and cyano group-containing, iodine-containing alkanes described in Laid-open European Patent Application 0868447. Diiodo compounds are preferred, however.

In the present specification, the above-mentioned "cure site monomer (b1)" and "bromine atom- and/or iodine atom-containing saturated aliphatic compound (b2)" are sometimes referred to collectively as "crosslinking site-containing monomer". Thus, the elastomeric fluoropolymer of the invention contains the crosslinking site-containing monomer-derived unit (B).

The term "crosslinking site-containing monomer-derived unit (B)" as used herein means that moiety derived from the crosslinking site-containing monomer to be described later herein which constitutes a part of the molecular structure of the elastomeric fluoropolymer.

The crosslinking site-containing monomer-derived unit (B) content is preferably 0.01 to 10% by mass of the elastomeric fluoropolymer. A more preferred lower limit is 0.05% by mass, a more preferred upper limit is 5% by mass and a still more preferred upper limit is 3% by mass.

Only one single species or two or more species of the crosslinking site-containing monomer-derived unit (B) may occur in the elastomeric fluoropolymer of the invention.

The crosslinking site-containing monomer-derived unit (B) content so referred to herein is the value obtained by F¹⁹-NMR spectrometry.

Preferred as the crosslinking site-containing monomer is the above-mentioned bromine atom- and/or iodine atom-containing saturated aliphatic compounds (b2) from the viewpoint that the molecular weight and molecular weight distribution of the product elastomeric fluoropolymer can be adjusted with ease. Iodine atom-containing saturated aliphatic compounds are more preferred, and saturated aliphatic diiodo compounds are still more preferred. 1,4-Diiodoperfluorobutane is still more preferred as the crosslinking site-containing monomer.

The elastomeric fluoropolymer of the invention more preferably has a bromine atom- and/or iodine atom-containing saturated aliphatic compound (b2)-derived unit content of 0.01 to 10% by mass from the excellent crosslinkability viewpoint, among others.

The elastomeric fluoropolymer of the invention generally has a Mooney viscosity of 10 to 100 as measured at 100°C. A preferred lower limit to the Mooney viscosity is 30 from the mechanical strength and chemical strength viewpoint, and a preferred upper limit thereto is 80 from the moldability/processability viewpoint.

The Mooney viscosity [ML(1+10)] so referred to herein is the value obtained by carrying out the measurement according to ASTM D 1646.

The elastomeric fluoropolymer of the invention can be produced, for example, by the elastomeric fluoropolymer producing method of the invention, which is to be described later herein. The elastomeric fluoropolymer of the invention may occur as an aqueous emulsion or as a solid such as gum or crumb, for instance.

The gum mentioned above consists of small granular lumps of the elastomeric fluoropolymer, and the crumb mentioned above is in the form of an amorphous mass of the elastomeric fluoropolymer as resulting from failure of that polymer to retain the gum form at room temperature and fusion together of the small granular lumps. The elastomeric fluoropolymer of the invention contains the vinyl group-containing fluorinated emulsifier-derived unit (A) and the crosslinking site-containing monomer-derived unit(s) (B) and, therefore, the set time on the occasion of curing is short and that fluoropolymer can be molded/processed with ease and, when subjected to polyol curing, it advantageously gives moldings reduced in permanent compression set.

The elastomeric fluoropolymer of the invention preferably has an iodine atom content of 0.01 to 10% by mass since, then, such fluoropolymer is particularly excellent in crosslinkability in the step of molding/processing.

A preferred lower limit to the iodine atom content is 0.1% by mass, and a preferred upper limit thereto is 5% by mass.

The method of producing an elastomeric fluoropolymer of the invention comprises polymerizing a fluoromonomer in an aqueous medium in the presence of a vinyl group-containing fluorinated emulsifier and a cure site monomer (b1) and/or a bromine atom- and/or iodine atom-containing saturated aliphatic compound (b2).

The vinyl group-containing fluorinated emulsifier and preferred examples thereof are as described hereinabove referring to the elastomeric fluoropolymer of the invention.

In the method of producing the elastomeric fluoropolymer of the invention, the vinyl group-containing fluorinated emulsifier is preferably used at addition levels of 1 ppm to 5% by mass relative to the aqueous medium.

When the level of addition of the vinyl group-containing fluorinated emulsifier is lower than 1 ppm relative to the aqueous medium, the elastomeric fluoropolymer obtained tends to adhere to the reactor inside in increased amounts, lowering the productivity. At addition levels exceeding 5% by mass relative to the aqueous medium, the elastomeric fluoropolymer obtained may show decreased thermal stability.

A more preferred lower limit to the level of addition of the vinyl group-containing fluorinated emulsifier is 10 ppm relative to the aqueous medium, a still more preferred lower limit thereto is 50 ppm relative to the aqueous medium, a more preferred upper limit thereto is 2% by mass relative to the aqueous medium, and a still more preferred upper limit thereto is 1% by mass relative to the aqueous medium.

The method of producing an elastmeric fluoropolymer of the invention comprises polymerizing a fluoromonomer in the presence of the vinyl group-containing fluorinated emulsifier and, therefore, the elastomeric fluoropolymer obtained is excellent in dispersion stability and shows a high rate of curing.

The method of producing an elastmeric fluoropolymer of the invention comprises polymerizing a fluoromonomer in the presence of not only the above-mentioned vinyl group-containing fluorinated emulsifier but also a cure site monomer (b1) and/or a bromine atom- and/or iodine atom-containing saturated aliphatic compound (b2).

The cure site monomer (b1) and/or the bromine atom- and/or iodine atom-containing saturated aliphatic compound (b2) and preferred examples of these are as described hereinabove referring to the elastomeric fluoropolymer of the invention, and they are hereinafter sometimes referred to also collectively as "crosslinking site-containing monomer".

In the method of producing an elastmeric fluoropolymer of the invention, the crosslinking site-containing monomer is used at addition levels of 0.01 to 10% by mass relative to the total amount of the monomers to be fed. The crosslinking site-containing monomer can be used more preferably at addition levels not lower than 0.05% by mass relative to the total amount of the monomers to be fed, and can be used more preferably at addition levels not higher than 5% by mass, still more preferably at addition levels not higher than 3% by mass, relative to the total amount of the monomers to be fed.

The method of producing an elastmeric fluoropolymer of the invention comprises polymerizing a fluoromonomer in an aqueous medium.

The term "fluoromonomer" as used herein referring to the method of producing an elastmeric fluoropolymer of the invention includes, within the meaning thereof, the first monomer mentioned above and a copolymerizable compound containing at least one fluorine atom, which is optionally added when desired.

The method of producing an elastmeric fluoropolymer of the invention may also comprise polymerizing the fluoromonomer mentioned above together with a fluorine-free monomer added as desired.

As the fluoromonomer and the fluorine-free monomer, there may be mentioned, for example, the same ones as described hereinabove referring to the elastomeric fluoropolymer of the invention.

From the viewpoint of the dispersion stability of the product elastomeric fluoropolymer, a preferred lower limit to the total feed of the fluoromonomer(s) and fluorine-free monomer is 10 parts by mass and a more preferred lower limit is 20 parts by mass, per 100 parts by mass of the aqueous medium. From the yield of fluoroelastomer viewpoint, a preferred upper limit is 100 parts by mass and a more preferred upper limit is 80 parts by mass, per 100 parts of the aqueous medium.

The total feed of the fluoromonomer and fluorine-free monomer is the sum total of the amounts to be initially charged at the start of the polymerization reaction and the amounts to be continuously fed during the polymerization reaction.

Among them, the feed of the fluorine-free monomer can be properly selected according to the desired composition of the elastomeric fluoropolymer.

The above polymerization may be carried out by adding a radical polymerization initiator to the aqueous medium in addition to the vinyl group-containing fluorinated emulsifier, the crosslinking site-containing monomer, the fluoromonomer and the optional fluorine-free monomer.

Generally used as the radical polymerization initiator are water-soluble inorganic compound peroxides or water-soluble organic compound peroxides, for example persulfates such as ammonium persulfate and potassium persulfate, bissuccinoyl peroxide and bisglutaroyl peroxide. These may be used singly or two or more of them may be used in combination. In carrying out the polymerization within a low temperature range, a redox system initiator is preferably used. Further, so long as the stability of the latex will not be impaired, it is also possible to use a water-insoluble organic peroxide and/or a water-insoluble azo compound either alone or in combination with a water-soluble inorganic compound peroxide or a water-soluble organic compound peroxide.

The level of addition of the radical polymerization initiator can be properly selected according to the composition and yield of the elastomeric fluoropolymer to be produced and to the usage of the crosslinking site-containing monomer and so forth. The radical polymerization initiator is preferably added at levels of 0.01 to 0.4 part by mass, more preferably 0.05 to 0.3 part by mass, per 100 parts by mass of the elastomeric fluoropolymer to be obtained.

Furthermore, the above-mentioned polymerization may also be carried out by adding a fluorine-containing surfactant other than the vinyl group-containing fluorinated emulsifier and/or a chain transfer agent, a radical scavenger and/or another additive or other additives.

As the above-mentioned fluorine-containing surfactant, there may be mentioned, for example, surfactants comprising fluorocarboxylic acids represented by the formula:

Z²-(CF₂)ₐₐ-COOH

[wherein Z² represents F or H and aa represents an integer of 3 to 20] and alkali metals salts, ammonium salts, amine salts and quaternary ammonium salts thereof; comprising fluorocarboxylic acids represented by the formula:

Z³- (CH₂CF₂)_{bb}-COOH

[wherein Z³ represents F or Cl and bb represents an integer of 3 to 13] and alkali metals salts, ammonium salts, amine salts and quaternary ammonium salts thereof; or comprising acidic compounds represented by the formula:

RfO-(CF(CF₃)CF₂O) _{cc}-CF (CF₃) -Z⁴

[wherein Rf represents a perfluoroalkyl group containing 1 to 7 carbon atoms, cc represents an integer of 0 to 10 and Z⁴ represents -COOM or -SO₃M in which M represents H, NH₄ or an alkali metal].

In carrying out the polymerization, one or two or more species of the above-mentioned fluorine-containing surfactants may be added.

The fluorine-containing surfactant addition level can be suitably selected according to the composition and yield of the elastomeric fluoropolymer to be produced and the usage of the crosslinking site-containing monomer and so forth. However, the above polymerization is preferably carried out in the absence of any fluorine-containing surfactant in view of the fact that elastomeric fluoropolymers which can be processed into moldings excellent in mechanical strength and chemical strength, among others, can then be obtained.

In the present specification, the term "fluorine-containing surfactant" does not include, within the meaning thereof, the vinyl group-containing fluorinated emulsifier mentioned above.

The chain transfer agent is not particularly restricted but includes those used in the production of fluoroelastomers, for example alcohols containing 1 to 12 carbon atoms, esters containing 1 to 12 carbon atoms, alkanes containing 1 to 12 carbon atoms, ketones containing 1 to 12 carbon atoms, and mercaptans containing 1 to 12 carbon atoms. The compounds mentioned above may be partially substituted by a fluorine and/or chlorine atom or atoms.

In the present specification, the chain transfer agent mentioned above does not include, within the meaning thereof, such bromine atom-and/or iodine atom-containing saturated aliphatic compounds as perfluorocarbons with one or two fluorine atoms being substituted by a bromine and/or iodine atom or atoms.

The alcohols containing 1 to 12 carbon atoms include, for example, methanol, ethanol, propanol and butanol.

The esters containing 1 to 12 carbon atoms include, for example, methyl acetate, ethyl acetate, butyl acetate, ethyl propionate, dimethyl malonate, diethyl malonate, dimethyl succinate or diethyl succinate.

The alkanes containing 1 to 12 carbon atoms include, for example, methane, ethane, propane, butane, pentane and hexane.

The ketones containing 1 to 12 carbon atoms include, for example, acetone, acetylacetone, methyl ethyl ketone and cyclohexanone.

The mercaptans containing 1 to 12 carbon atoms include, for example, dodecylmercaptan and the like.

As the partially halogen-substituted compounds, there may be mentioned, for example, chlorocarbons, chloroform and carbon tetrachloride.

Preferred as the chain transfer agent are saturated hydrocarbons containing 1 to 6 carbon atoms, alcohol containing 1 to 4 carbon atoms, carboxylic acid ester compounds containing 4 to 8 carbon atoms, chlorine-substituted hydrocarbons containing 1 or 2 carbon atoms, ketones containing 3 to 5 carbon atoms, and/or mercaptans containing 10 to 12 carbon atoms. More preferred as the chain transfer agent are isopentane, isopropanol, diethyl malonate, carbon tetrachloride, acetone, ethyl acetate and/or dodecylmercaptan from the viewpoint of dispersibility in polymerization medium, chain transfer behavior and removability from desired products. Still more preferred are isopentane, diethyl malonate and ethyl acetate, among others, since their chain transfer behavior is appropriate and they cause little decrease in rate of polymerization.

In the method of producing an elastmeric fluoropolymer of the invention, the chain transfer agent is preferably used in an amount of 0.0001 to 5 parts by mass per 100 parts by mass of the total addition amount of the first monomer and the monomer other than the first monomer. For adjusting the molecular weight and molecular weight distribution of the elastomeric fluoropolymer, the chain transfer agent may be added more preferably in an amount of not smaller than 0.0005 part by mass, still more preferably not smaller than 0.001 part by mass, and more preferably in an amount of not larger than 1% by mass, still more preferably not larger than 0.1% by mass, per 100 parts by mass of the total addition amount mentioned above.

The polymerization mentioned above may be carried out in any of the batchwise, semibatchwise and continuous procedures. Preferably, however, it is carried out in a semibatchwise procedure.

In the above polymerization, additional amounts of the above-mentioned fluoromonomer, fluorine-free monomer, crosslinking site-containing monomer, polymerization initiator, vinyl group-containing fluorinated emulsifier, fluorine-containing surfactant, chain transfer agent and/or radical scavenger and/or other additive may be fed during the polymerization reaction according to the composition and yield of the desired elastomeric fluoropolymer.

Further, by carrying out the above polymerization through the multi-step polymerization process described in International Laid-open Publication 00/001741, it is possible to prepare elastomeric fluoropolymers having a desired monomer composition.

The above polymerization is generally carried out while maintaining the temperature within a range of 10 to 120°C. At temperatures lower than 10°C, any effectively high rate of reaction cannot be attained on an industrial scale. At temperatures exceeding 120°C, the reaction pressure necessary for maintaining the polymerization reaction will become high and the apparatus for maintaining the reaction will become expensive.

The above polymerization is generally carried out while maintaining the pressure within a range of 0.5 to 10 MPa. A preferred lower limit to the pressure range is 1.0 MPa and a preferred upper range to that range is 6.2 MPa.

When the polymerization is carried out in a semibatchwise manner, the desired polymerization pressure can be attained at the initial stage of polymerization by adjusting the monomer gas amount on the occasion of initial feeding. After the start of the polymerization, the pressure is adjusted by adjusting the monomer gas amount to be additionally fed.

When the polymerization is carried out continuously, the desired polymerization pressure is adjusted by adjusting the back pressure in the outlet tube for the elastomeric fluoropolymer dispersion obtained.

If the pressure mentioned above is lower than 0.5 MPa, the monomer concentration in the polymerization reaction system will become too low, hence the rate of reaction cannot arrive at a satisfactory level; as a result, the elastomeric fluoropolymer obtained may fail to have a satisfactorily high molecular weight. At pressure levels exceeding 10 MPa, the cost of the apparatus for maintaining the pressure will rise.

The polymerization is generally carried for 0.5 to 100 hours.

The amount of the elastomeric fluoropolymer obtained by carrying out the above polymerization is roughly equal to the total monomer amount fed, and the fluoropolymer is obtained in an amount of 10 to 30 parts by mass per 100 parts by mass of the aqueous medium. The elastomeric fluoropolymer preferably amounts to not smaller than 20 parts by mass but not greater than 25 parts by mass per 100 parts by mass of the aqueous medium. When the elastomeric fluoropolymer content is lower than 10 parts by mass, the productivity will be undesirably low and, when it exceeds 30 parts by mass, it becomes sometimes difficult for the elastomeric fluoropolymer to be dispersed.

In the case of the above polymerization being carried out according to the multi-step polymerization process mentioned above, the elastomeric fluoropolymer content mentioned above is the value after completion of all the stages in the polymerization process. The elastomeric fluoropolymer content obtained in the first polymerization step may be lower than 10 parts by mass per 100 parts by mass of the aqueous medium. The elastomeric fluoropolymer just after polymerization as obtained by carrying out the polymerization as mentioned above generally has an average particle size of 10 to 500 nm and is excellent in dispersion stability.

The elastomeric fluoropolymer (hereinafter sometimes referred to as "elastomeric fluoropolymer (P)") obtained by the method of producing an elastmeric fluoropolymer of the invention may be in any form provided that it is the product obtained by the polymerization mentioned above; thus, it may constitute an aqueous emulsion as obtained just after polymerization, or may constitute such an elastomeric fluoropolymer aqueous dispersion as mentioned later herein, or may constitute a rubber or crumb obtained from the above-mentioned aqueous emulsion by coagulation and drying, for instance.

The method of producing an elastmeric fluoropolymer of the invention is carried out in the presence of the vinyl group-containing fluorinated emulsifier and the crosslinking site-containing monomer and, therefore, the molecular weight and molecular weight distribution of the product elastomeric fluoropolymer can be adequately adjusted and the elastomeric fluoropolymer can be obtained with the crosslinking site-containing monomer-derived units introduced therein. The prior art elastomeric fluoropolymer production methods have problems, namely (1) when the polymerization reaction is carried out using a halogen-containing compound as a chain transfer agent, the dispersion stability of the product elastomeric fluoropolymer decreases and (2) when the fluorine-containing surfactant addition level is low, the elastomeric fluoropolymer produced tends to adhere to the reactor inside, leading to decreases in yield. On the contrary, according to the method of producing an elastmeric fluoropolymer of the invention, the yield is good and elastomeric fluoropolymers containing the crosslinking site-containing monomer-derived units within the polymer and showing good dispersion stability can be obtained even when the polymerization is carried out in the presence of a small amount of the vinyl group-containing fluorinated emulsifier using a halogen-containing compound as the crosslinking site-containing monomer.

The elastomeric fluoropolymer aqueous dispersion which comprises a particle comprising elastomeric fluoropolymer dispersed in an aqueous medium in which the elastomeric fluoropolymer is the above-mentioned elastomeric fluoropolymer of the invention or the above-mentioned elastomeric fluoropolymer (P) also constitutes an aspect of the present invention.

The elastomeric fluoropolymer aqueous dispersion of the invention contains a vinyl group-containing fluorinated emulsifier or does not contain any such emulsifier.

The elastomeric fluoropolymer aqueous dispersion of the invention can be rendered free of the vinyl group-containing fluorinated emulsifier in the aqueous medium since the elastomeric fluoropolymer contains the emulsifier unit mentioned above.

The vinyl group-containing fluorinated emulsifier content in the elastomeric fluoropolymer aqueous dispersion of the invention can be reduced to lower than 1000 ppm.

The vinyl group-containing fluorinated emulsifier content in the elastomeric fluoropolymer aqueous dispersion is preferably lower than 100 ppm, more preferably lower than 10 ppm, from the viewpoint of good crosslinkability in the step of molding/processing.

The content of the elastomeric fluoropolymer of the invention in the elastomeric fluoropolymer aqueous dispersion of the invention can be adjusted to 10 to 70 parts by mass per 100 parts by mass of the aqueous medium by such a procedure as concentration.

The elastomeric fluoropolymer aqueous dispersion of the invention can be prepared, for example, by subjecting the aqueous emulsion obtained just after completion of the above-mentioned polymerization reaction for producing the elastomeric fluoropolymer of the invention to coagulation by a method per se known in the art, followed by purification.

The method of purification is not particularly restricted but includes, for example, extraction, ion exchange resin treatment, and ultrafiltration.

The elastomeric fluoropolymer aqueous dispersion of the invention has a vinyl group-containing fluorinated emulsifier content within the range mentioned above and, therefore, can be processed into substantially vinyl group-containing fluorinated emulsifier-free coagulates, compositions, moldings and so forth.

The elastomeric fluoropolymer of the invention and/or the elastomeric fluoropolymer rubber or crumb comprising the above-mentioned elastomeric fluoropolymer (P) can be made substantially free of any fluorine-containing surfactant.

The above-mentioned elastomeric fluoropolymer rubber or crumb can be obtained by subjecting the elastomeric fluoropolymer aqueous dispersion of the invention to coagulation and drying.

The coagulant that can be used in the above coagulation includes aluminum salts such as aluminum sulfate and alum, calcium salts such as calcium sulfate, magnesium salts such as magnesium sulfate, and coagulation aids, for example monovalent cation salts such as sodium chloride and potassium chloride.

An elastomeric fluoropolymer composition comprising the above-mentioned elastomeric fluoropolymer of the invention and/or the above-mentioned elastomeric fluoropolymer (P) also constitutes an aspect of the present invention. The elastomeric fluoropolymer composition of the invention may comprise, in addition to the above-mentioned elastomeric fluoropolymer of the invention and/or the above-mentioned elastomeric fluoropolymer (P), a curing agent, a filler and/or the like.

The curing agent may be a polyol, polyamines, organic peroxide, organotin, bis(aminophenol)tetraamine or bis(thioaminophenol), for instance.

The elastomeric fluoropolymer composition of the invention, which comprises the elastomeric fluoropolymer of the invention and/or the above-mentioned elastomeric fluoropolymer (P), is substantially free of the vinyl group-containing fluorinated emulsifier, hence is excellent in view of ready crosslinkability in the step of molding/processing. When subjected to polyol curing, for instance, the elastomeric fluoropolymer composition of the invention shows better curability as compared with the compositions based on the prior art elastomeric fluoropolymers.

The elastomeric fluoropolymer molding of the invention is the molding obtained by crosslinking the elastomeric fluoropolymer of the invention or the above-mentioned elastomeric fluoropolymer (P). The crosslinking can be carried out using, for example, the above-mentioned curing agent.

When subjected to polyol curing, for instance, the cured elastomeric fluoropolymer molding of the invention is lower in permanent compression set as compared with the moldings obtained from the prior art elastomeric fluoropolymers.

The elastomeric fluoropolymer molding of the invention, which comprises the above-mentioned fluoroelastomeric polymer, is low in permanent compression set, excellent in mechanical strength and is suited for use as a seal, electric wire covering, tube, hose, film, laminate and so forth, in particular as a part for a semiconductor manufacturing apparatus or automobile part or the like.

### EFFECTS OF THE INVENTION

The elastomeric fluoropolymer of the invention, which has the constitution described hereinabove, shows the following excellent characteristics: a high rate of curing on the occasion of molding/processing and a high crosslink density and, further, moldings obtained therefrom are low in permanent compression set.

The method of producing an elastmeric fluoropolymer of the invention, which has the constitution described hereinabove, consists in a simple process, makes it possible to increase the rate of polymerization reaction and, further, the elastomeric fluoropolymer obtained shows a high rate of curing and attains a high crosslink density on the occasion of molding/processing and, furthermore, the moldings obtained are low in permanent compression set.

### BEST MODES FOR CARRYING OUT THE INVENTION

The following examples illustrate the invention in further detail. These examples are, however, by no means limitative of the scope of the invention.

The measurements made in the Examples and Comparative Examples were carried out in the following manner.
(1) Solid matter concentration: The aqueous dispersion obtained was dried at 150°C for 1 hour and the solid matter concentration was calculated based on the loss in mass on that occasion.
(2) Mooney viscosity [ML(1+10)]: This was measured according to ASTM D 1646.
(3) Composition of the elastomeric fluoropolymer: Calculated based on the values obtained by F¹⁹ NMR spectrometry.
(4) Vinyl group-containing fluorinated emulsifier concentration in the elastomeric fluoropolymer emulsion: The concentration was determined by adding an equal volume of methanol to the aqueous emulsion and subjecting the mixture to Soxhlet extraction, followed by HPLC analysis of the extract.
(5) Average particle diameter: The dynamic light scattering method was employed.
(6) Iodine atom content: The content was determined by carrying out elemental analysis.

### Example 1

A 3-liter stainless steel pressure vessel equipped with a stirrer was charged with 1000 ml of deionized water and 1 g of ammonium perfluoro(9,9-dihydro-2,5-bistrifluoromethyl-3,6-dioxa)-8-nonenoate [RS-1] as a vinyl group-containing fluorinated emulsifier and, after repeated pressurization with nitrogen and vacuum degassing, a fluoromonomer mixture composed of VDF/HFP = 65/35 mole percent (hereinafter such fluoromonomer mixture is referred to as "mixed monomer") was introduced into the vessel at a reduced pressure of -700 mmHg and the pressure was raised to 1.5 MPa at 80°C, and 10 g of a 0.5% (by mass) aqueous solution of ammonium persulfate was introduced under pressure to initiate the polymerization reaction, upon which the pressure was found to fall. After pressure fall to 1.4 MPa, 2.98 g of I(CF₂CF₂)₂I and a mixed monomer composed of VDF/HFP ₌ 78/22 mole percent were added to raise the pressure again to 1.5 MPa.

Thereafter, this procedure, namely addition, after each pressure fall to 1.4 MPa, of the mixed monomer composed of VDF/HFP = 78/22 mole percent to restore the vessel inside pressure of 1.5 MPa, was repeated during the polymerization reaction. During the polymerization reaction, 10 g of a 0.5% (by mass) aqueous solution of ammonium persulfate was added at 3-hour intervals, and the reaction was continued for 8.1 hours, whereupon 1325 g of an aqueous emulsion was obtained. The aqueous emulsion obtained had a solid matter concentration of 23% by mass, an unreacted RS-1 concentration of 42 ppm and an average particle diameter of 198 nm.

Hydrochloric acid was added to the aqueous emulsion obtained to cause coagulation, followed by washing and further followed by 12 hours of drying at 120°C. The elastomeric fluoropolymer was thus recovered.

The elastomeric fluoropolymer obtained had a composition of VDF/HFP/RS-1 ₌ 77.95/22.00/0.05 mole percent (69.2/30.5/0.3% by mass) and a Mooney viscosity at 100°C of 46.

### Examples 2-5

Elastomeric fluoropolymers were obtained in the same manner as in Example 1 except that the polymerization conditions were changed as shown in Table 1.

The results obtained in Examples 1-5 are shown in Table 2.

**Table 1**

| | Deionized water (g) | APS (ppm) | RS-1 (g) | I(CF₂CF₂)₂I (g) | Pressure (MPa) | Polymerization time (hours) |
|---|---|---|---|---|---|---|
| Example 1 | 1000 | 150 | 1 | 2.98 | 1.5 | 8.1 |
| Example 2 | 1000 | 50 | 0.1 | 2.98 | 1.5 | 1.3 |
| Example 3 | 1000 | 200 | 10 | 2.98 | 1.5 | 10.3 |
| Example 4 | 1000 | 50 | 1 | 0.3 | 1.5 | 2.8 |
| Example 5 | 1000 | 300 | 1 | 12 | 1.5 | 17.2 |

In Table 1, APS denotes the concentration in deionized water.

**Table 2**

| | PC (wt%) | Yield (g) | Composition | | | Composition | | | | Mooney viscosity (value at 100°C) |
|---|---|---|---|---|---|---|---|---|---|---|
| | | | VDF (mol%) | HFP (mol%) | RS-1 (mol%) | VDF (wt%) | HFP (wt%) | RS-1 (wt%) | I content (wt%) | |
| Example 1 | 23 | 1325 | 77.95 | 22.00 | 0.05 | 69.2 | 30.5 | 0.3 | 0.29 | 46 |
| Example 2 | 3 | 1031 | 77.95 | 22.00 | 0.05 | 69.2 | 30.5 | 0.3 | 3.02 | 34 |
| Example 3 | 27 | 1411 | 77.70 | 21.93 | 0.38 | 67.7 | 29.9 | 2.4 | 0.25 | 43 |
| Example 4 | 10 | 1111 | 77.88 | 21.98 | 0.14 | 68.8 | 30.3 | 0.9 | 0.11 | 65 |
| Example 5 | 13 | 1207 | 77.93 | 21.99 | 0.07 | 69.1 | 30.5 | 0.5 | 1.54 | 11 |

In Table 2, PC denotes the solid matter concentration, the yield is expressed in terms of the mass of the aqueous emulsion after the polymerization reaction, and I content is the iodine atom content in the elastomeric fluoropolymer.

### Example 6

A 3-liter stainless steel pressure vessel equipped with a stirrer was charged with 1000 g of deionized water, RS-1 (1 g) as the vinyl group-containing fluorinated emulsifier and 0.09 g of disodium hydrogen phosphate dodecahydrate as a pH adjuster and, after repeated pressurization with nitrogen and vacuum degassing, a mixed monomer composed of TFE/Pr = 85/15 mole percent was introduced into the vessel at a reduced pressure of -700 mmHg and the pressure was raised to 2.5 MPa at 70°C. Then, 10 g of a 0.5% (by mass) aqueous solution of ammonium persulfate was introduced under pressure to initiate the polymerization reaction, whereupon the pressure was found to fall. After pressure fall to 2.4 MPa, 2.98 g of I(CF₂CF₂)₂I and a mixed monomer composed of TFE/Pr = 55/45 mole percent were added to raise the pressure again to 2.5 MPa.

Thereafter, this procedure, namely addition, after each pressure fall to 2.4 MPa, of the mixed monomer composed of TFE/Pr = 55/45 mole percent to restore the vessel inside pressure of 2.5 MPa, was repeated during the polymerization reaction. During the polymerization reaction, 10 g of a 0.5% (by mass) aqueous solution of ammonium persulfate was added at 3-hour intervals, and the reaction was continued for 13 hours, whereupon 1248 g of an aqueous emulsion was obtained.

The aqueous emulsion obtained had a solid matter concentration of 20% by mass, an unreacted RS-1 concentration of 127 ppm and an average particle diameter of 156 nm.

Hydrochloric acid was added to the aqueous emulsion obtained to cause coagulation, followed by washing and further followed by 12 hours of drying at 120°C. The elastomeric fluoropolymer was thus recovered.

The elastomeric fluoropolymer obtained had a composition of TFE/Pr/RS-1 = 54.94/45.01/0.05 mole percent (74.16/25.52/0.32% by mass) and a Mooney viscosity at 100°C of 43.

### Example 7

A 3-liter stainless steel pressure vessel equipped with a stirrer was charged with 1000 g of deionized water, 5 g of the vinyl group-containing fluorinated emulsifier RS-1 and 0.09 g of disodium hydrogen phosphate dodecahydrate as a pH adjuster and, after repeated pressurization with nitrogen and vacuum degassing, a mixed monomer composed of TFE/PMVE = 25/75 mole percent was introduced into the vessel at a reduced pressure of -700 mmHg and the pressure was raised to 0.78 MPa at 53°C. Then, 20 ml of an aqueous solution of ammonium persulfate [APS] (264 mg/ml) was introduced under nitrogen pressure to initiate the polymerization reaction. After fall of the inside pressure to 0.69 MPa as a result of progress of the polymerization reaction, 1. 8 g of CF₂=CFOCF₂CF (CF₃) OCF₂CF₂CN [CNVE] was introduced under nitrogen pressure. Then, 4.7 g of TFE and 5.3 g of PMVE were introduced each under its own pressure until arrival of the pressure at 0.78 MPa. Thereafter, with the progress of the polymerization reaction, TFE and PMVE were introduced under pressure in the same manner for repeated pressure increase and pressure fall between 0.69 to 0.78 MPa and, after arrival of the total feed of TFE and PMVE at 70 g, 1.8 g of CNVE was introduced under nitrogen pressure.

After the lapse of 7 hours after the start of the polymerization reaction and arrival of total feed of TFE and PMVE at 130 g, the autoclave was cooled and the unreacted monomer was discharged to give 1100 g of an aqueous dispersion with a solid matter concentration of 11.2% by mass.

A 1000-g portion of this aqueous dispersion was diluted with 3000 g of water, and the dilution was gradually added to 2800 g of 3.5% (by mass) aqueous solution of hydrochloric acid with stirring. After 5 minutes of stirring after the addition, the coagulate was collected by filtration, the polymer obtained was further poured into 2 kg of HCFC-141b, and the mixture was stirred for 5 minutes and then again filtered. After further 4 repetitions of this procedure comprising washing with HCFC-141b and filtration, the solid was dried under vacuum at 60°C for 72 hours to give 110 g of an elastomeric fluoropolymer (nitrile group-containing elastomer).

The elastomeric fluoropolymer had a composition of TFE/PMVE/CNVE/RS-1 ₌ 59.6/39.7/0.6/0.1 mole percent and a Mooney viscosity at 100°C of 65.

### Example 8

A 3-liter stainless steel pressure vessel equipped with a stirrer was charged with 1480 ml of deionized water and 0.1 g of ammonium perfluoro(6,6-dihydro-2-trifluoromethyl-3-oxa)-5-hexenoate [RS-2] as the vinyl group-containing fluorinated emulsifier and, after repeated pressurization with nitrogen and vacuum degassing, a fluoromonomer mixture composed of VDF/HFP = 55/45 mole percent (hereinafter such fluoromonomer mixture being referred to as "mixed monomer") was introduced into the vessel at a reduced pressure of -700 mmHg and the pressure was raised to 1.5 MPa at 80°C, and 14 g of a 0.5% (by mass) aqueous solution of ammonium persulfate was introduced under pressure to initiate the polymerization reaction, whereupon the pressure was found to fall. After pressure fall to 1. 4 MPa, 2.59 g of I(CF₂CF₂)₂I and a mixed monomer composed of VDF/HFP = 78/22 mole percent were added to raise the pressure again to 1.5 MPa.

Thereafter, this procedure, namely addition, after each pressure fall to 1.4 MPa, of the mixed monomer composed of VDF/HFP = 78/22 mole percent to restore the vessel inside pressure of 1.5 MPa, was repeated during the polymerization reaction. During the polymerization reaction, 6 g of a 0.5% (by mass) aqueous solution of ammonium persulfate was added at 3-hour intervals, and the reaction was continued for 10 hours, whereupon 2228 g of an aqueous emulsion was obtained. The aqueous emulsion obtained had a solid matter concentration of 24.7% by mass and an average particle diameter of 118 nm.

Hydrochloric acid was added to the aqueous emulsion obtained to cause coagulation, followed by washing and further followed by 12 hours of drying at 120°C. The elastomeric fluoropolymer was thus recovered.

The elastomeric fluoropolymer obtained (washed and dried coagulate from the aqueous emulsion) had a composition of VDF/HFP = 77.7/22.3 mole percent (59.8/40.2% by mass), an iodine content of 0.2% by mass as determined by elemental analysis, and a Mooney viscosity at 100°C of 49.

A 1-g portion of the above washed and dried coagulate from the aqueous emulsion was dissolved in 10 of acetone, this polymer solution was dispersed in 30 g of deionized water, the solid matter was removed, and the unreacted RS-2 in the aqueous acetone solution was determined by liquid chromatography/tandem mass spectrometry (LC-MS/MS). The content of RS-2 was below the detection limit (= 1 ppb). The wastewater after coagulation was also subjected to LC/MS/MS and the content of RS-2 was found to be below the detection limit.

In the above LC/MS/MS, RS-2 contained in the aqueous solution of acetone after removal of the solid matter was assayed under the following conditions, and the weight proportion relative to the washed and dried coagulate was calculated. In the above assaying, Waters 2695 Separation module, Micromass Quattro micro TM API, and Waters 2996 Photodiode Array detector (all being products of Waters) were used. In the above liquid chromatography, a Waters Atlantis dC-18 (30 mm x 2.1 mm i.d.) column was used, and the elution was carried out with 0.01 M ammonium acetate:acetonitrile (55:45 v:v) at a flow rate of 0.15 ml/minute. In the above tandem mass spectrometry, negative electrospray (ESP⁻) ionization was carried out.

### Example 9

An aqueous emulsion (2173 g) was obtained by continuing the reaction for 15 hours in the same manner as in Example 8 except that 0.15 g of ammonium perfluoro(5-trifluoromethyl-4,7-dioxa)-8-nonenoate [RS-3] as the fluorine-containing, vinyl group containing emulsifier. The aqueous emulsion obtained had a solid matter concentration of 22.9% by mass and an average particle diameter of 134 nm.

Hydrochloric acid was added to the aqueous emulsion obtained to cause coagulation, followed by washing and further followed by 12 hours of drying at 120°C. The elastomeric fluoropolymer was thus recovered.

The elastomeric fluoropolymer obtained (washed and dried coagulate from the aqueous emulsion) had a composition of VDF/HFP = 77.6/22.4 mole percent (59.6/40.4% by mass), an iodine content of 0.2% by mass as determined by elemental analysis, and a Mooney viscosity at 100°C of 44. The washed and dried coagulate from the aqueous emulsion was subjected to LC/MS/MS in the same manner as in Example 8; the unreacted RS-3 was below the detection limit. The RS-3 content in the wastewater after coagulation was also below the detection limit.

### Example 10

A 3-liter stainless steel pressure vessel equipped with a stirrer was charged with 1650 ml of deionized water and 0.1 g of ammonium perfluoro(6,6-dihydro-2-trifluoromethyl-3-oxa)-5-hexenoate [RS-2] as the vinyl group-containing fluorinated emulsifier and, after repeated pressurization with nitrogen and vacuum degassing, 0.07 ml of isopentane was introduced at a reduced pressure of -700 mmHg and then a fluoromonomer mixture composed of VDF/TFE/HFP = 45/15/40 mole percent (hereinafter such fluoromonomer mixture being referred to as "mixed monomer") was introduced into the vessel and the pressure was raised to 1.5 MPa at 80°C, and 5.2 g of a 0.5% (by mass) aqueous solution of ammonium persulfate was introduced under pressure to initiate the polymerization reaction, whereupon the pressure was found to fall. After pressure fall to 1.4 MPa, a mixed monomer composed of VDF/TFE/HFP = 60/20/20 mole percent were added to raise the pressure again to 1.5 MPa.

Thereafter, this procedure, namely addition, after each pressure fall to 1.4 MPa, of the mixed monomer composed of VDF/TFE/HFP = 60/20/20 mole percent to restore the vessel inside pressure of 1.5 MPa, was repeated during the polymerization reaction. After feeding of 285 g of the additional mixed monomer, 6.7 g of monoiodoperfluoropropane was added, and the reaction was further continued until further addition of 265 g of the mixed monomer and, after 7.5 hours, 2227 g of an aqueous emulsion was obtained. The aqueous emulsion obtained had a solid matter concentration of 25.7% by mass and an average particle diameter of 99 nm.

Hydrochloric acid was added to the aqueous emulsion obtained to cause coagulation, followed by washing and further followed by 12 hours of drying at 120°C. The elastomeric fluoropolymer was thus recovered.

The elastomeric fluoropolymer obtained (washed and dried coagulate from the aqueous emulsion) had a composition of VDF/TFE/HFP = 61.6/17.2/21.2 mole percent (44.6/19.5/36.0% by mass), an iodine content of 0.1% by mass as determined by elemental analysis, and a Mooney viscosity at 100°C of 43. The washed and dried coagulate from the aqueous emulsion was subjected to LC/MS/MS in the same manner as in Example 8; the unreacted RS-2 was below the detection limit. The RS-2 content in the wastewater after coagulation was also below the detection limit.

### Comparative Example 1

An aqueous emulsion (1370 g) was obtained by carrying out the reaction for 12 hours in the same manner as in Example 1 except that 2 g of ammonium perfluorooctanoate [APFO] was used in lieu of RS-1.

The aqueous emulsion obtained had a solid matter concentration of 27.3% by mass and an average particle diameter of 266 nm.

The fluorocopolymer obtained after the same steps of coagulation, washing and drying as in Example 1 had a composition of VDF/HFP ₌ 77.9/22.1 mole percent. It had a Mooney viscosity at 100°C of 45.

### Test Example 1

The ingredients specified in Table 3 were incorporated in each of the elastomeric fluorocopolymer obtained in Example 1 and the fluorocopolymer obtained in Comparative Example 1, and each mixture was kneaded in the conventional manner on a rubber roll. The thus-prepared uniform curable composition was evaluated for curability on a curastometer. The composition was cured under the conditions specified in Table 3 and the moldings were subjected to physical property measurements.

As for the test conditions, the tensile strength, elongation, tensile stress and permanent compression set were measured according to JIS K 6301, and the Shore hardness was measured according to ASTM D 2240. The curability was measured at 170°C using a curastometer (JSRII).

The results are shown in Table 3.

**Table 3**

| | Example 1 | Comp. Ex. 1 |
|---|---|---|
| Copolymer (parts by mass) | 100 | 100 |
| Bisphenol AF (parts by mass) | 2 | 2 |
| BTPPC (parts by mass) | 0.6 | 0.6 |
| Carbon black (parts by mass) | 20 | 20 |
| Magnesium oxide (parts by mass) | 3 | 3 |
| Calcium hydroxide (parts by mass) | 6 | 6 |
| Press curing | 170°C x 15 min | 170°C x 15 min |
| Oven curing | 230°C x 24 hrs | 230°C x 24 hrs |
| Tensile strength (MPa) | 14 | 13 |
| Elongation (%) | 245 | 240 |
| Tensile stress M₁₀₀ (MPa) | 4.2 | 4.5 |
| Permanent compression set (%) | 10 | 15 |
| Shore hardness | 76 | 77 |

| Curability | | |
|---|---|---|
| T₁₀ | 4.0 | 6.1 |
| T₉₀ | 5.0 | 8.2 |
| µ | 3.15 | 2.56 |

In Table 3, T₁₀ denotes "induction time", T₉₀ "optimum cure time", and µ "degree of curing".

The elastomeric fluorocopolymer obtained in Example 1 showed higher cure rates (T₁₀, T₉₀) as compared with the fluorocopolymer obtained in Comparative Example 1, and gave cured moldings showing better characteristics, typically smaller permanent compression set.

### INDUSTRIAL APPLICABILITY

The elastomeric fluoropolymer of the invention, which has the constitution described hereinabove, shows marked characteristics on the occasion of molding/processing, namely fast cure rates and high crosslink densities and, further, the moldings obtained therefrom are small in permanent compression set.

The method of producing an elastmeric fluoropolymer of the invention, which has the constitution as described above, consists in a simple process and makes it possible to increase the polymerization reaction rate and, further, the elastomeric fluoropolymer obtained thereby is curable at high rates and attains a high crosslink density on the occasion of molding/processing and, further, the moldings obtained therefrom are small in permanent compression set.

## Claims

1. An elastomeric fluoropolymer having a vinyl group-containing fluorinated emulsifier-derived unit (A) and a unit (B) derived from a cure site monomer (b1) and/or bromine atom- and/or iodine atom-containing saturated aliphatic compound (b2),
wherein said vinyl group-containing fluorinated emulsifier is a compound having a radical polymerizable unsaturated bond and a hydrophilic group within the molecule.

2. The elastomeric fluoropolymer according to Claim 1,
wherein the compound having the radical polymerizable unsaturated bond and the hydrophilic group within the molecule is a vinyl group-containing fluorinated compound (1) represented by the general formula (1):
CR¹R²=CR³(CR⁴R⁵)ⱼ-(O)ₖ-R-Y (1)
[wherein R¹, R², R³, R⁴ and R⁵ are the same or different and each represents a perfluoroalkyl group (which may optionally be substituted by H), H, F, Cl, Br or I, R represents a straight or branched fluoroalkylene group resulting from substitution of part or all of H atoms of the corresponding alkylene group by F, which may contain oxygen atom in the main chain thereof, j represents an integer of 0 to 6, k represents an integer of 0 or 1, and Y represents a hydrophilic group].

3. An elastomeric fluoropolymer having a vinyl group-containing fluorinated emulsifier-derived unit (A) and a crosslinking site-containing monomer-derived unit (B),
wherein said vinyl group-containing fluorinated emulsifier is a vinyl group-containing fluorinated compound (I) represented by the general formula (I):
CF₂=CF-(CF₂)ₐ-Y (I)
[wherein a represents an integer of 1 to 10 and Y represents -SO₃M or -COOM in which M represents H, NH₄ or an alkali metal],
a vinyl group-containing fluorinated compound (II) represented by the general formula (II):
CF₂=_{CF}-(_{CF2C}(CF₃)F)_{b}-Y (II)
[wherein b represents an integer of 1 to 5 and Y represents -SO₃M or -COOM in which M represents H, NH₄ or an alkali metal], a vinyl group-containing fluorinated compound (III) represented by the general formula (III):
CF₂=CFO-(CF₂)_{c}-Y (III)
[wherein c represents an integer of 1 to 10 and Y represents -SO₃M or -COOM in which M represents H, NH₄ or an alkali metal], a vinyl group-containing fluorinated compound (IV) represented by the general formula (IV):
CF₂=CF (CF₂)_{d}-O- (CF₂CFXO) ₑ- (CF₂) _{f}-Y (IV)
[wherein X represents -F or -CF₃, d represents an integer of 0 to 2, e represents an integer of 1 to 10, f represents an integer of 1 to 3 and Y represents -SO₃M or -COOM in which M represents H, NH₄ or an alkali metal], a vinyl group-containing fluorinated compound (V) represented by the general formula (V):
CH₂=CFCF₂O- (CF (CF₃) CF₂O) g-CF (CF₃) -Y (V)
[wherein g represents an integer of 0 to 10 and Y represents -SO₃M or -COOM in which M represents H, NH₄ or an alkali metal],
a vinyl group-containing fluorinated compound (VI) represented by the general formula (VI):
CF₂=CF(CF₂)ₕO-(CF(CF₃)CF₂O)ᵢ-CF(CF₃)-Y (VI)
[wherein h represents an integer of 1 to 6, i represents an integer of 1 to 10 and Y represents - SO₃M or -COOM in which M represents H, NH₄ or an alkali metal],
a vinyl group-containing fluorinated compound (VII) represented by the general formula (VII):
CH₂=CH(CF₂)ₚ₁-Y (VII)
[wherein p1 represents an integer of 1 to 10 and Y represents -SO₃M or -COOM in which M represents H, NH₄ or an alkali metal] and/or
a vinyl group-containing fluorinated compound (VII) represented by the general formula (VII):
CF₂=CFO- (CH₂) q- (CF₂) p₂-Y (VIII)
[wherein q represents an integer of 1 to 4, p2 represents an integer of 1 to 10 and Y represents - SO₃M or -COOM in which M represents H, NH₄ or an alkali metal].

4. The elastomeric fluoropolymer according to Claim 1, 2 or 3,
which is a vinylidene fluoride-based copolymer.

5. The elastomeric fluoropolymer according to Claim 1, 2 or 3,
which is a tetrafluoroethylene/propylene-based copolymer.

6. The elastomeric fluoropolymer according to Claim 1, 2 or 3,
which is a tetrafluoroethylene/perfluoro vinyl ether-based copolymer.

7. The elastomeric fluoropolymer according to Claim 3, 4, 5 or 6,
wherein the vinyl group-containing fluorinated emulsifier is the vinyl group-containing fluorinated compound (I), the vinyl group-containing fluorinated compound (III), the vinyl group-containing fluorinated compound (IV), the vinyl group-containing fluorinated compound (V), the vinyl group-containing fluorinated compound (VI), the vinyl group-containing fluorinated compound (VII) and/or the vinyl group-containing fluorinated compound (VIII).

8. The elastomeric fluoropolymer according to Claim 7,
wherein the vinyl group-containing fluorinated emulsifier is a vinyl group-containing fluorinated compound represented by the general formula (i):
CH₂=CFCF₂O- (CF (CF₃) CF₂O) ₖ-CF (CF₃) -Y (i)
(wherein k represents an integer of 0 to 3 and Y represents -SO₃M or -COOM in which M represents H, NH₄ or an alkali metal).

9. The elastomeric fluoropolymer according to Claim 1, 2, 3, 4, 5, 6, 7 or 8,
wherein the vinyl group-containing fluorinated emulsifier-derived unit (A) amounts to not less than 10 ppm but not more than 10% by mass of said elastomeric fluoropolymer.

10. The elastomeric fluoropolymer according to Claim 1, 2, 3, 4, 5, 6, 7, 8 or 9,
wherein the unit (B) amounts to 0.01 to 10% by mass of said elastomeric fluoropolymer.

11. A method of producing an elastomeric fluoropolymer comprising polymerizing a fluoromonomer in an aqueous medium in the presence of a vinyl group-containing fluorinated emulsifier and a cure site monomer (b1) and/or a bromine atom-and/or iodine atom-containing saturated aliphatic compound (b2),
wherein said vinyl group-containing fluorinated emulsifier is a compound having a radical polymerizable unsaturated bond and a hydrophilic group within the molecule.

12. The method of producing an elastomeric fluoropolymer according to Claim 11,
wherein the compound having the radial polymerizable unsaturated bond and the hydrophilic group within the molecular is a vinyl group-containing fluorinated compound (1) represented by the general formula (1):
CR¹R²=CR³(CR⁴R⁵)ⱼ_(O) ₖ-R-Y (1)
[wherein R¹, R², R³, R⁴ and R⁵ are the same or different and each represents a perfluoroalkyl group (which may optionally be substituted by H), H, F, Cl, Br or I, R represents a straight or branched fluoroalkylene group resulting from substitution of part or all of H atoms of the corresponding alkylene group by F, which may contain oxygen atom in the main chain thereof, j represents an integer of 0 to 6, k represents an integer of 0 or 1, and Y represents a hydrophilic group].

13. A method of producing an elastomeric fluoropolymer comprising polymerizing a fluoromonomer in an aqueous medium in the presence of a vinyl group-containing fluorinated emulsifier and a crosslinking site-containing monomer,
wherein said vinyl group-containing fluorinated emulsifier is a vinyl group-containing fluorinated compound represented by the general formula (I):
CF₂=CF-(CF₂)ₐ-Y (I)
[wherein a represents an integer of 1 to 10 and Y represents -SO₃M or -COOM in which M represents H, NH₄ or an alkali metal],
a vinyl group-containing fluorinated compound (II) represented by the general formula (II):
CF₂=CF- (CF₂C (CF₃) F) _{b}-Y (II)
[wherein b represents an integer of 1 to 5 and Y represents -SO₃M or -COOM in which M represents H, NH₄ or an alkali metal],
a vinyl group-containing fluorinated compound represented by the general formula (III):
CF₂=CFO-(CF₂)_{c}-Y (III)
[wherein c represents an integer of 1 to 10 and Y represents -SO₃M or -COOM in which M represents H, NH₄ or an alkali metal],
a vinyl group-containing fluorinated compound represented by the general formula (IV):
CF₂=CF(CF₂)_{d}-O-(CF₂CFXO)ₑ-(CF₂)_{f}-Y (IV)
[wherein X represents -F or -CF₃, d represents an integer of 0 to 2, e represents an integer of 1 to 10, f represents an integer of 1 to 3 and Y represents -SO₃M or -COOM in which M represents H, NH₄ or an alkali metal],
a vinyl group-containing fluorinated compound represented by the general formula (V):
CH₂=CFCF₂O- (CF (CF₃) CF₂O) _{g}-CF (CF₃) -Y (V)
[wherein g represents an integer of 0 to 10 and Y represents -SO₃M or -COOM in which M represents H, NH₄ or an alkali metal],
a vinyl group-containing fluorinated compound represented by the general formula (VI):
CF₂=CF(CF₂)ₕO-(CF(CF₃)CF₂O)ᵢ-CF(CF₃)-Y (VI)
[wherein h represents an integer of 1 to 6, i represents an integer of 1 to 10 and Y represents - SO₃M or -COOM in which M represents H, NH₄ or an alkali metal],
a vinyl group-containing fluorinated compound represented by the general formula (VII):
CH₂=CH(CF₂)ₚ₁-Y (VII)
[wherein p1 represents an integer of 1 to 10 and Y represents -SO₃M or -COOM in which M represents H, NH₄ or an alkali metal] and/or
a vinyl group-containing fluorinated compound represented by the general formula (VIII):
CF₂=CFO-(CH₂)_{q}-(CF₂)ₚ₂-Y (VIII)
[wherein q represents an integer of 1 to 4, p2 represents an integer of 1 to 10 and Y represents - SO₃M or -COOM in which M represents H, NH₄ or an alkali metal].

14. The method of producing an elastomeric fluoropolymer according to Claim 13,
wherein the crosslinking site monomer is a bromine atom- and/or iodine atom-containing saturated aliphatic compound (b2).

15. The method of producing an elastomeric fluoropolymer according to Claim 11, 12, 13 or 14,
wherein the elastomeric fluoropolymer is a vinylidene fluoride-based copolymer.

16. The method of producing an elastomeric fluoropolymer according to Claim 11, 12, 13 or 14,
wherein the elastomeric fluoropolymer is a tetrafluoroethylene/propylene-based copolymer.

17. The method of producing an elastomeric fluoropolymer according to Claim 11, 12, 13 or 14,
wherein the elastomeric fluoropolymer is a tetrafluoroethylene/perfluoro vinyl ether-based copolymer.

18. The method of producing an elastomeric fluoropolymer according to Claim 11, 12, 13, 14, 15, 16 or 17,
wherein the polymerization of the fluoromonomer is carried out in the absence of any fluorine-containing surfactant.

19. An elastomeric fluoropolymer aqueous dispersion which comprises a particle comprising an elastomeric fluoropolymer dispersed in an aqueous medium,
wherein said elastomeric fluoropolymer is the elastomeric fluoropolymer according to Claim 1, 2, 3, 4, 5, 6, 7, 8, 9 or 10 or an elastomeric fluoropolymer produced by the method of producing an elastomeric fluoropolymer according to Claim 11, 12, 13, 14, 15, 16, 17 or 18,
said elastomeric fluoropolymer aqueous dispersion contains a vinyl group-containing fluorinated emulsifier or does not contain any such emulsifier and
the content of said vinyl group-containing fluorinated emulsifier is lower than 1000 ppm relative to said elastomeric fluoropolymer aqueous dispersion.

20. An elastomeric fluoropolymer composition which contains the elastomeric fluoropolymer according to Claim 1, 2, 3, 4, 5, 6, 7, 8, 9 or 10 or an elastomeric fluoropolymer produced by the method of producing an elastomeric fluoropolymer according to Claim 11, 12, 13, 14, 15, 16, 17 or 18.

21. An elastomeric fluoropolymer molding which is obtained by crosslinking of the elastomeric fluoropolymer according to Claim 1, 2, 3, 4, 5, 6, 7, 8, 9 or 10 or an elastomeric fluoropolymer by the method of producing an elastomeric fluoropolymer according to Claim 11, 12, 13, 14, 15, 16, 17 or 18.
